# EUROPEAN PATENT SPECIFICATION

(11) **EP 2 236 240 B1**
(45) Date of publication and mention of the grant of the patent: **08.08.2018**
(21) Application number: 09004652.5
(22) Date of filing: 31.03.2009
(51) Int. Cl.: B23K 35/28, B23K 35/02, B23K 1/19, B23K 1/20, B23K 103/10, B23K 101/14, C22F 1/04

(54) **Method for manufacturing an aluminium device, comprising a brazing and a preheating step**
Verfahren zum Herstellen einer Aluminiumvorrichtung, mit einer Hartlöt- und einer Vorwärmstufe
Procédé de fabrication d'un dispositif d'aluminium comprenant une étape de brasage et de préchauffage

(43) Date of publication of application: 06.10.2010
(73) Proprietor: MAHLE Behr GmbH & Co. KG, 70469 Stuttgart (DE)
(72) Inventor: Grünenwald, Bernd, 72622 Nürtingen (DE); Gray, Alan, OX15 4BB Oxon (GB); Wald, Alexander, 71065 Sindelfingen (DE); Flemming, Alan, John, Ernest, Banbury OX16 1WE (GB)
(74) Representative: Grauel, Andreas

(56) References cited:
- EP-A- 1 918 394
- US-A1- 2003 111 459
- US-A1- 2004 185 293

## Description

### BACKGROUND OF THE INVENTION

The invention relates to a method for manufacturing an aluminum device.

US 6,451,453 B1 describes aluminum alloys for the manufacture of brazed heat exchangers, wherein after hot and cold rolling of a plate of a given alloy an annealing at a temperature depending on the alloy is performed. This annealed material is the basis for forming strips or tubes in order to assemble a heat exchanger to be brazed. The brazing process can cause a recrystallization of the alloy and a microstructure with finer grains.

US 2004/0185293 A1 discloses a brazing sheet of a heat exchanger with a core material of an aluminum alloy and with a brazing aluminum alloy metal clad on at least one side of the core.

US 2003/0111459 A1 discloses a brazing apparatus for metal workpieces such as aluminum, copper, iron and so forth.

### SUMMARY OF THE INVENTION

One object of the present invention is to provide a method for manufacturing a brazed aluminum device with improved mechanical strength.

A specific object of the invention is to provide a method for manufacturing a brazed aluminum device in which sag resistance of aluminum parts is improved at brazing temperatures.

These objects are achieved by a method having the features of claim 1.

By keeping the temperature of the device within the defined temperature range near the first temperature for a defined duration, the microstructure is improved in a favorable manner. In particular, it is possible to increase the grain size and introduce anisotropic grains elongated in a favorable direction, e.g. in the plane of a sheet. Such grains improve the sag resistance and/or mechanical strength, in particular at elevated temperatures. Furthermore, grain boundaries e.g. parallel to a sheet surface increase the corrosion resistance of the material.

The improvement of sag resistance by encouraging the formation of elongated grains is achieved in an inventive way by altering the brazing cycle of the assembled device. The invention does not exclude further annealing treatments of the alloy prior to the assembling of the device, e. g. an annealing of a rolled sheet. But it is to be understood that a further reduction of cost and effort is achieved when such further heat treatments are omitted.

According to the invention, said first temperature is a recrystallization temperature of the aluminum alloy. Such temperature usually shows in differential scanning calorimetry (DSC) of the alloy. Defining the recrystallization temperature as the onset of the recrystallization process, the defined temperature range will usually be chosen at or slightly above the recrystallization temperature.

In order to provide a well defined result and reproducibility, the defined temperature range has a width of less than 100 °C, in particular not more than 50 °C.

In a preferred embodiment, said duration lasts at least 2 minutes, in particular at least 5 minutes in order to ensure a sufficient amount of recrystallization.

In order to ensure a sufficient throughput in mass production as well as avoiding unfavorable side effects, said duration, in a preferred embodiment, lasts no longer than 25 minutes, in particular no longer than 15 minutes. According to the invention, the keeping of the temperature in the defined range for the defined duration is achieved by a slow heating rate within said temperature range. For instance, such slow heating rate can easily be adapted within existing brazing furnace lines. Generally, as there is still an increase of the temperature during the defined heat treatment, the time necessary for the recrystallization within a furnace is minimized and the energy consumption is optimized. The slow heating rate is set at less than 30 °C per minute, preferably less than 10 °C per minute, in particular less than 5 °C per minute.

In a further improved embodiment of the invention, a further step of determining the first temperature by means of measuring the aluminum alloy is provided. For instance, such measuring of the aluminum alloy comprises the method of differential scanning calorimetry (DSC). Most preferred, the determining of the first temperature is at least performed on random samples, in particular on every batch of the delivered aluminum alloy. It is generally advantageous to measure the recrystallization temperature as this can vary sensitively with the exact composition of the alloy, even within the allowed deviation of the components. Furthermore, the thermo-mechanical history of the material can effect the recrystallization temperature significantly. It showed that, depending on the deformations performed, e.g. by hot or cold rolling of a sheet or even later shaping into wrought products like e.g. fins, the recrystallization temperature of the same alloy may differ up to by several ten degrees Celsius. The aluminum alloy is capable of forming a brown band during brazing. Such forming of a brown band is an effect known to the skilled person, wherein a compound of the alloy sets at the brazed regions and enhances corrosion resistance due to the electrochemical properties of the compound. Usually this effect is connected to the amount of Manganese (Mn) in the alloy. In particular, the forming of a brown band is typical for specific alloys which have not been homogenized as an ingot. Suitable alloys are described e.g. in US 5,037,707 A or EP 0 326 337 A1.

In a generally preferred embodiment of the invention, at least one of the parts of the device comprises a composite sheet, the aluminum alloy forming a core of said composite sheet. Even more preferred, the core of the composite sheet is clad on one or both sides with at least one layer of a Silicon containing material, in particular an AA4XXX alloy. Such layer or layers may contain a large amount, e.g. 7.5%-15%, of Silicon, thereby lowering the melting point of the layer and working as a brazing material. Specific examples for suitable layer materials are AA4045 or AA343. It is also possible for such layer to be an aluminum alloy containing Zinc (Zn), e.g. AA7072, or to be pure aluminum. In a preferred detailed embodiment, one side of the core may be clad with an Al-Si-alloy and the other side being clad with a Zn-containing aluminum alloy, e.g. AA7072, or pure aluminum.

In a preferred embodiment, the aluminum alloy is selected from the group AA3XXX, AA5XXX or AA6XXX. Most preferred, an AA3XXX alloy is used, such being one capable of forming a brown band. It is particularly advantageous if grain refining elements such as Cr, Zr, V and Sc are substantially absent or at least not deliberately added. These elements are avoided because they complicate recycling of both in house scrap and end of lifetime scrap.

An optimized aluminum alloy to be used with the inventive method contains, before brazing:
0%-0.25% Si;
0%-0.40%, in particular 0%-0.15% Fe;
0.2%-1.0%, in particular 0.4%-0.8% Cu; and
0.7%-1.5% Mn.

There may be further components of the alloy, wherein of course the main component remains aluminum. The concentrations named in this description are defined as weight-%.

Preferably, the aluminum alloy, before brazing, contains:
< 0.6% Mg;
< 0.10% Ti;
< 0.05% Cr;
< 0.05% Zr;
< 0.05% V;
< 0.05% Zn; and
< 0.005% Sc.

These percentages are to be understood as a maximum in each case, the embodiment particularly comprising alloys wherein one or more of the named components being absent or on the level of a trace impurity.

In a preferred embodiment, the defined temperature range is contained between 350 °C and 400 °C. Though a suitable temperature range can be dependant on the alloy and its thermo-mechanical history, a sufficiently fast and yet effective recrystallization of the material is typically achieved if it happens in the named temperature interval.

In order to optimize the manufacture process, the heating to the first temperature and said heating to the brazing temperature is performed in the same brazing furnace. Industrial brazing furnaces usually comprise a long heating track with the devices to be brazed being conveyed through the track. Hence such brazing furnace can easily be adapted to comply with an inventive method, the device being heat-treated in a first section of the furnace and then being brazed in a second section of the heating track.

Most preferred the device comprises a heat exchanger. Heat exchangers, e.g. heat exchangers for vehicles like radiators or evaporators of air conditioning systems, are to be optimized for weight and surface, hence showing strong demand e.g. for stacks of very thin structures like tubes or fins. For such structures, critical mechanical forces need not even occur during use, but during the brazing process when the compressed stack is heated to high temperature. It is to be understood that there is an inventive improvement yet when the mechanical strength, e.g. sag resistance, is improved at least for the time of the brazing process itself.

More features and advantages of the invention can be derived from the following examples of specific inventive embodiments and from the depending claims.

### SHORT DESCRIPTION OF THE DRAWINGS

- Fig. 1: shows results from differential scanning calorimetry of two aluminum alloys used for an inventive method.
- Fig. 2: shows heating curves according to prior art methods as well as a heating curve according to an inventive method.

### DETAILED DESCRIPTION OF PREFERRED EMBODIMENTS

One specific example for an aluminum alloy suitable for an inventive method contains:
0%-0.25% Si;
0%-0.40%, in particular 0%-0.15% Fe;
0.2%-1.0%, in particular 0.4%-0.8% Cu; and
0.7%-1.5% Mn.
< 0.6% Mg;
< 0.10% Ti;
< 0.05% Cr;
< 0.05% Zr;
< 0.05% V;
< 0.05% Zn; and
< 0.005% Sc
rest Al.

The aluminum alloy may be produced by a continuous casting process such as DC casting to ingot or roll or belt casting to strip.

Any suitable production process may be used to manufacture a strip or sheet provided that at final gauge it is sufficiently cold worked to undergo recrystallization during brazing.

Optionally the cast material may be homogenised before rolling. Homogenisation is normally carried out at 560 to 580°C for 2 to 24 hours and may include a subsequent cool to 480°C and hold. Where an AA3XXX alloy is of the type capable of forming a brown band, it is preferable to avoid homogenisation.

Cladding, when required, is normally carried out by hot rolling. Alternatively, the cladding may be applied by a cold cladding process such as described in WO 2002040210 A2. Composite ingots may be cast as for example by the process described in US 2006/0185816 A1 having a cladding layer cast in place simultaneously with the core. Alternatively the Si may also be provided from a particulate powder as in the Siflux ® process (see US 5,232,788) or the Si layer may be applied by flame spraying or electro-plating or any other method known in the art.

Hot rolling is typically carried out at 540-440°C to a thickness of about 2.5-5 mm. The strip is then cold rolled to the final dimensions. Inter-annealing may be carried out as necessary during cold rolling. However, the cold rolled sheet when rolled to its final gauge is sufficiently cold worked to undergo recrystallization when heated to a sufficiently high temperature. Preferably, the sheet is in the H24 condition.

The strips or sheets are then formed into parts of an aluminum heat exchanger, in particular into flat tubes, plates and fins, mostly done by cold forming of the sheets.

The parts are then mechanically assembled to a heat exchanger, wherein a stack of usually several dozen flat tubes separated by layers of fins is arranged and held under a compression force in a clamp and/or between terminal walls of the stack.

The fins, plates and flat tubes are formed from sheets being clad on one or both sides with a thin layer of a brazing alloy of a lower melting temperature than the aluminum alloy core of the sheet. Such brazing alloys are typically containing high amounts of silicon, e.g. between 7% and 20%. Alternatively, there might be a coating containing silicon powder or the like, having the effect that the silicon diffuses into the surface region of the aluminum alloy and forms a lower melting alloy during the brazing process.

The mechanically preassembled heat exchanger is than brought into a brazing furnace as known in the art. The brazing furnace comprises a heating track of some length, the preassembled heat exchangers being conveyed along the heating track with adjustably defined speed. The heating track comprises several heating sources which allow adjusting a defined temperature profile along the track.

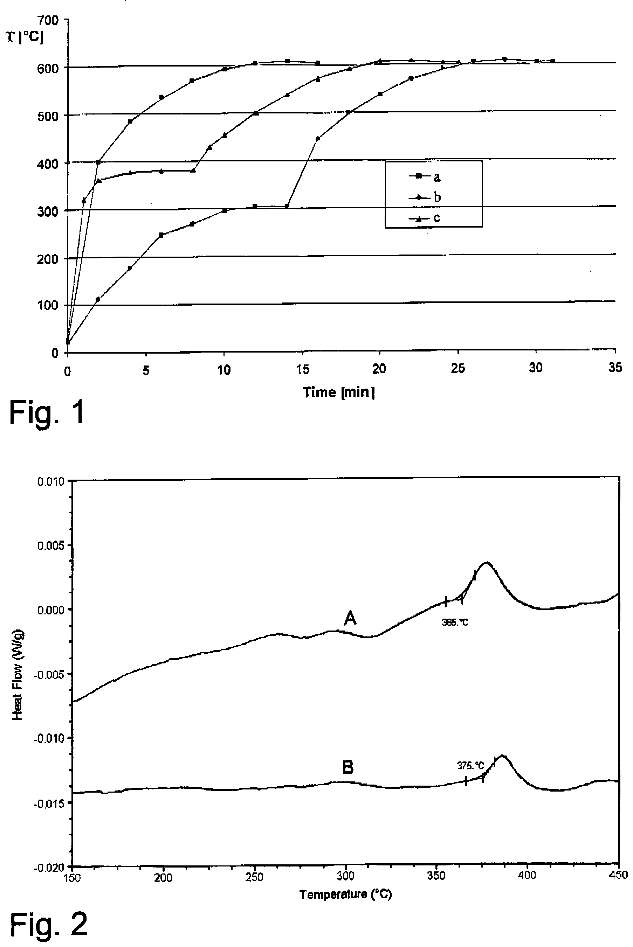

Further steps of the inventive method are explained with reference to fig. 1:
Figure 1 shows two heating curves a, b according to the prior art and one heating curve c according to the inventive embodiment.

In curve a (prior art) the device is quickly heated up to the brazing temperature, which is at about 600 °C in each case.

In curve b (prior art), the device is first heated to a moderate temperature around 300 °C and kept on this level for a couple of minutes. Thereafter, another quick heating up to the brazing temperature is performed. The temperature level around 300 °C does not give any effect to the aluminum alloy, but allows substances like organic compounds or lubricants to evaporate from the surfaces.

In curve c, which is a heating curve according to an inventive method, the device is first quickly heated to a temperature of around 370 °C. At this temperature, a recrystallization of the aluminum alloy occurs. As can be seen from the above curve in fig 2, this temperature has been measured for the used alloy and its individual thermomechanical history by means of differential calorimetry scanning (DSC).

After reaching the onset recrystallization temperature of 370 °C, the device in curve c is, in a defined and controlled manner, slowly heated further up to a temperature of about 390 °C. This heating over a defined temperature range of about 20 °C takes a defined time of approximately 5 minutes, during which the process of recrystallization goes on. Hence, the heating rate in the defined temperature range is less than 5 °C per minute. It is within the scope of the invention that the temperature within the defined range may also be held constant or even oscillate, for instance by means of a control cycle.

After having reached the upper limit of the temperature range (390 °C), a much quicker heating rate is applied until the brazing temperature is reached.

After having reached the brazing temperature, the brazing process is performed in the usual way.

The temperature at which recrystallization takes place depends on the alloy composition and on the degree of cold work, the thermal history as well as the heating rate. Recrystallization occurs by the migration of high angle grain boundaries through the sheet structure resulting in the formation of new grains. It has now been discovered that the size and shape of these new grains can be influenced by controlling the rate of heating to the brazing temperature especially the rate close to the recrystallization temperature.

It is to be understood that a plateau at temperatures e.g. around 300 °C for evaporation of organic compounds or lubricants as in curve b may, depended on the demands, be added to curve c as a further section prior to the recrystallization process. If possible with respect to the organic compounds or lubricants, it is of course most advantageous if such evaporation can be performed simultaneously with the recrystallization. According to the invention, the heating rate the recrystallization temperature range is less than 30°C per minute, preferably, the rate is less than 10°C minute for example less than 5°C minute, and the slower heating rate is maintained for 2 to 25 minutes, preferably 5 to 15 minutes. The heating rates and times should be sufficient to induce the desired change of the crystalline structure, but the duration must not unduly interfere with the productivity of the process. Holding the temperature constant for 2-25 minutes or 5 to 15 minutes close to the recrystallization temperature may be preferred depending on the type of furnace and the control.

The recrystallization temperature to be adjusted may be measured by means known to those skilled in the art. A preferred method is to measure the heat flow using differential scanning calorimetry (DSC). The scanning rate should be close to the heating rate to be during brazing. The recrystallization temperature range is taken to lay ±20°C of the temperature determined by DSC.

Commercial brazing of heat exchangers is carried out in industrial furnaces controlled to follow a predetermined heating cycle. A large number of heat exchangers will be heat treated in any one production run. The production process may be continuous. Metal from a number of production batches or from different sources may be used to make the heat exchangers in any one production run. Any brazing process may be used, for example vacuum brazing or by using the NOCOLOK ® process, provided that the heating cycle can be controlled to provide the required heating rate through the recrystallization range. In these mass production processes, the heating cycle profile, once set, is preferably not adjusted to accommodate different batches of metal.

Where the heating rate through the recrystallization temperature is important, it is essential to keep the same recrystallization temperature from batch to batch. In one embodiment, the heating profile preferably remains constant during each production run with the metal properties controlled so as to have a constant recrystallization temperature range.

In another embodiment, the heating profile may be adjusted in the defined temperature range for recrystallization due to differences of the recrystallization temperature of different batches.

In any case, it may be a preferred further step of the inventive method to monitor the recrystallization temperature of each or just sampled batches of the aluminum alloy by an analysis method like DSC.

In a further example of an inventive method described hereafter, two samples A and B of aluminum alloys have been analyzed by DSC (see fig. 2), heat treated according to the results and measured in terms of mechanical properties and changes in the microstructure:
Two samples designated A and B having had different thermo mechanical histories were selected because they had previously been shown to have different grain structures after conventional brazing treatment. Both samples A and B were from commercially available medium strength long-life alloy with composition ranges given in Table 1.

**Table 1: Alloy compositions of samples A and B in weight-%**

| Si | Fe | Cu | Mn | Mg | Zn | Ti | Zr | Al |
|---|---|---|---|---|---|---|---|---|
| < 0,12 | < 0,24 | 0,35 - 0,50 | 1,0 - 1,25 | 0,15 - 0,25 | < 0,05 | < 0,10 | < 0,05 | rest |

The recrystallization temperatures of the two coils used in this exercise were determined, using DSC at 10°C/min scan rate, to be 365°C and 375°C (see figure 2). The exact figure is defined as the point at which the curve begins to deviate from the trend and this is determined from the crossing point of two tangents to the curve. From this, an equalization temperature of 380°C was chosen for the experiment.

Samples taken from the as received coils were then subjected to a simulated heating to the brazing temperature of 605°C with a hold at the brazing temperature of 5 minutes.

The slow recrystallization treatment introduces a hold of about 6 minutes at 380°C, which is just above the measured recrystallization temperature as determined and then rapidly heated to the brazing temperature (see curve c in figure 1).

The comparison material was held for about 6 minutes at 80°C below the recrystallization temperature before rapid heating to the brazing temperature (see curve b in figure 1). The heating rates for this sample were determined from industrial practice. Separate experiments determined that the faster heating rate to the vicinity of the recrystallization temperature did not affect the grain shape so the slow recrystallization treatment was carried out with a faster heating rate.

Grain size measurements were made using three optical images for each variant using the aquinto 'a4i' suite of programs. Measurements were made viewing the sheet in the L/S-T direction (longitudinal/short transverse direction). The resulting grain size and shape measured after cooling from the brazing temperature are reported in Table 2.

**Table 2: Grain Size and Aspect Ratio**

| | A | | B | |
|---|---|---|---|---|
| | Std. 2 stage Braze | 380°C Equalise Braze | Std. 2 stage Braze | 380°C Equalise Braze |
| Mean Intercept Horizontal | 183µm | 255µm | 87µm | 102µm |
| Mean Intercept Vertical | 39µm | 48µm | 29µm | 31µm |
| Anisotropy Index | 4.71 | 5.28 | 3.0 | 3.25 |

From these results, it is clear that the 380°C hold (curve c in fig. 1) has increased the anisotropy index of both coils with a moderate increase in grain size compared with the standard 2 stage treatment (curve b in fig. 1).

Holding at 380°C appears to increase the grain size in both coils as well as in-creasing the anisotropy index. It is anticipated that alterations to the overall heating cycle will allow the control of grain size whilst increasing the index. Sag tests were carried out on samples treated as described before except that the final holding temperature (brazing temperature) was 610°C for 6 minutes. The test involved cutting a 10 mm wide strip sheet, heating it to 610°C using one of the above mentioned heating cycles (except that the hold was for 6 minutes at the brazing temperature) whilst clamped at one end with a 60 mm unsupported length protruding horizontally. The droop from horizontal expressed in mm after cooling was taken as a measure of the sag resistance. The results are reported in Table 3.

**Table 3: Sag Test Results**

| Process | 380°C Equalise Braze (curve c fig. 1) | | Std. 2 stage Braze (curve b fig. 1) | |
|---|---|---|---|---|
| Coil | A | B | A | B |
| Mean Sag [mm] | 4.8 | 11.5 | 8.8 | 25.2 |

The 380°C equalization process has roughly halved the amount of sag for each coil, and despite coil B having an inherently poor grain structure for sag resistance, the mean sag for this coil has reduced from 25.3 mm to 11.5 mm with the change in heating profile.

It is to be understood that the specific features of the above described embodiments can be combined due to the respective demands, within the scope of the appended claims.

## Claims

1. A method for manufacturing an aluminum device, comprising the steps:
- mechanically assembling parts of the device, at least one of said parts consisting of an aluminum alloy;
- heating the device up to a first temperature, said first temperature being smaller than a brazing temperature of the device;
- keeping the temperature of the device within a defined temperature range near the first temperature for a defined duration; and
- heating the device further up to the brazing temperature,
wherein said first temperature is a recrystallization temperature of the aluminum alloy, and wherein said keeping of the temperature in said defined range for said defined duration is achieved by a slow heating rate within said temperature range, and wherein the aluminum alloy is capable of forming a brown band during brazing,
wherein said slow heating rate is set at less than 30 °C per minute, preferably less than 10 °C per minute, in particular less than 5 °C per minute and
wherein said defined temperature range has a width of less than 100 °C, in particular not more than 50 °C.

2. A method as claimed in claim 1, wherein said duration lasts at least 2 minutes, in particular at least 5 minutes.

3. A method as claimed in claim 1 or 2, wherein said duration lasts no longer than 25 minutes, in particular no longer than 15 minutes.

4. A method as claimed in any of the preceding claims, comprising the step:
- determining the first temperature by means of measuring the aluminum alloy.

5. A method as claimed in claim 4, wherein the measuring of the aluminum alloy comprises the method of differential scanning calorimetry (DSC).

6. A method as claimed in claims 4 or 5, wherein said determining the first temperature is at least performed on random samples, in particular on every batch of the aluminum alloy.

7. A method as claimed in any of the preceding claims, wherein at least one of the parts of the device comprises a composite sheet, the aluminum alloy forming a core of said composite sheet.

8. A method as claimed in one of the claims 1 to 7, wherein said core of the composite sheet is clad on one or both sides with at least one layer of a Silicon containing material, in particular an AA4XXX alloy.

9. A method as claimed in any of the preceding claims, wherein said aluminum alloy is from the group AA3XXX, AA5XXX or AA6XXX.

10. A method as claimed in any of the preceding claims, wherein said aluminum alloy, before brazing, contains:
0%-0.25% Si;
0%-0.40%, in particular 0%-0.15% Fe;
0.2%-1.0%, in particular 0.4%-0.8% Cu; and
0.7%-1.5% Mn.

11. A method as claimed in any of the preceding claims, wherein said aluminum alloy, before brazing, contains:
< 0.6% Mg;
< 0.10% Ti;
< 0.05% Cr;
< 0.05% Zr;
< 0.05% V;
< 0.05% Zn; and
< 0.005% Sc.

12. A method as claimed in any of the preceding claims, wherein said defined temperature range is contained between 350 °C and 400 °C.

13. A method as claimed in any of the preceding claims, wherein said heating to the first temperature and said heating to the brazing temperature is performed in the same brazing furnace.

14. A method as claimed in any of the preceding claims, wherein said device comprises a heat exchanger.

## Patentansprüche

1. Verfahren zur Herstellung einer Aluminiumvorrichtung, die folgenden Schritte umfassend:
- mechanisches Montieren von Teilen der Vorrichtung, wobei zumindest eines der Teile aus einer Aluminiumlegierung besteht;
- Erhitzen der Vorrichtung auf eine erste Temperatur, wobei die erste Temperatur niedriger als eine Löttemperatur der Vorrichtung ist;
- Halten der Temperatur der Vorrichtung innerhalb einer vordefinierten Temperaturspanne nahe der ersten Temperatur über eine definierte Dauer; und
- weiteres Erhitzen der Vorrichtung auf die Löttemperatur,
wobei die erste Temperatur eine Rekristallisationstemperatur der Aluminiumlegierung ist und wobei das Halten der Temperatur in der definierten Spanne über die definierte Dauer durch eine langsame Erhitzungsrate innerhalb der Temperaturspanne erreicht wird, und wobei die Aluminiumlegierung dazu in der Lage ist, während des Lötens ein braunes Band zu bilden,
wobei die langsame Erhitzungsrate auf weniger als 30 °C pro Minute festgelegt ist,
vorzugsweise weniger als 10 °C pro Minute, insbesondere weniger als 5 °C pro Minute, und
wobei die definierte Temperaturspanne eine Breite von weniger als 100 °C, insbesondere nicht mehr als 50 °C aufweist.

2. Verfahren nach Anspruch 1, wobei die Dauer zumindest 2 Minuten, insbesondere zumindest 5 Minuten dauert.

3. Verfahren nach Anspruch 1 oder 2, wobei die Dauer nicht länger als 25 Minuten, insbesondere nicht länger als 15 Minuten dauert.

4. Verfahren nach einem der vorhergehenden Ansprüche, den folgenden Schritt umfassend:
- Bestimmen der ersten Temperatur durch Messen der Aluminiumlegierung.

5. Verfahren nach Anspruch 4, wobei das Messen der Aluminiumlegierung das Verfahren der Differential-Scanning-Kalorimetrie (DSC) umfasst.

6. Verfahren nach Anspruch 4 oder 5, wobei das Bestimmen der ersten Temperatur zumindest an Stichproben durchgeführt wird, insbesondere an jedem Batch der Aluminiumlegierung.

7. Verfahren nach einem der vorhergehenden Ansprüche, wobei zumindest eines der Teile der Vorrichtung eine Verbundlage umfasst, wobei die Aluminiumlegierung einen Kern der Verbundlage bildet.

8. Verfahren nach einem der Ansprüche 1 bis 7, wobei der Kern der Verbundlage auf einer oder beiden Seiten mit zumindest einer Schicht aus einem silikonhaltigen Material, insbesondere einer AA4XXX-Legierung, versehen ist.

9. Verfahren nach einem der vorhergehenden Ansprüche, wobei die Aluminiumlegierung aus der Gruppe AA3XXX, AA5XXX oder AA6XXX ist.

10. Verfahren nach einem der vorhergehenden Ansprüche, wobei die Aluminiumlegierung vor dem Löten Folgendes enthält:
0 %-0,25 % Si;
0 %-0,40 %, insbesondere 0 %-0,15 % Fe;
0,2 %-1,0 %, insbesondere 0,4 %-0,8 % Cu; und
0,7 %-1,5 % Mn.

11. Verfahren nach einem der vorhergehenden Ansprüche, wobei die Aluminiumlegierung vor dem Löten Folgendes enthält:
< 0,6 % Mg;
< 0,10 % Ti;
< 0,05 % Cr;
< 0,05 % Zr;
< 0,05 % V;
< 0,05 % Zn; und
< 0,005 % Sc.

12. Verfahren nach einem der vorhergehenden Ansprüche, wobei die definierte Temperaturspanne zwischen 350 °C und 400 °C enthalten ist.

13. Verfahren nach einem der vorhergehenden Ansprüche, wobei das Erhitzen auf die erste Temperatur und das Erhitzen auf die Löttemperatur in demselben Lötofen durchgeführt wird.

14. Verfahren nach einem der vorhergehenden Ansprüche, wobei die Vorrichtung einen Wärmetauscher umfasst.

## Revendications

1. Procédé de fabrication d'un dispositif en aluminium, ledit procédé comprenant les étapes consistant :
- à assembler mécaniquement des pièces du dispositif, au moins l'une desdites pièces se composant d'un alliage d'aluminium ;
- à chauffer le dispositif jusqu'à une première température, ladite première température étant inférieure à une température de brasage du dispositif ;
- à maintenir la température du dispositif dans les limites d'une plage de température définie et proche de la première température pendant une durée définie ; et
- à continuer à chauffer le dispositif jusqu'à la température de brasage,
procédé au cours duquel ladite première température est une température de recristallisation de l'alliage d'aluminium et au cours duquel ledit maintien de la température dans ladite plage définie pendant ladite durée définie est obtenu par un faible degré de chauffage dans les limites de ladite plage de température, et procédé au cours duquel l'alliage d'aluminium est capable de former une bande brune au cours du brasage,
procédé au cours duquel ledit faible degré de chauffage est réglé à moins de 30°C par minute, de préférence à moins de 10°C par minute, en particulier à moins de 5°C par minute, et
procédé au cours duquel ladite plage de température définie a une amplitude de moins de 100°C, en particulier non supérieure à 50°C.

2. Procédé selon la revendication 1, au cours duquel ladite durée s'étend sur au moins 2 minutes, en particulier sur au moins 5 minutes.

3. Procédé selon la revendication 1 ou 2, au cours duquel ladite durée ne dépasse pas 25 minutes, en particulier ne dépasse pas 15 minutes.

4. Procédé selon l'une quelconque des revendications précédentes, comprenant l'étape consistant :
- à déterminer la première température en procédant à la mesure de l'alliage d'aluminium.

5. Procédé selon la revendication 4, dans lequel la mesure de l'alliage d'aluminium comprend le procédé de calorimétrie différentielle à balayage (DSC).

6. Procédé selon la revendication 4 ou 5, au cours duquel ladite détermination de la première température est au moins réalisée sur des échantillons prélevés de façon aléatoire, en particulier sur chaque lot de l'alliage d'aluminium.

7. Procédé selon l'une quelconque des revendications précédentes, dans lequel au moins l'une des pièces du dispositif comprend une feuille composite, l'alliage d'aluminium formant une âme de ladite feuille composite.

8. Procédé selon l'une quelconque des revendications 1 à 7, au cours duquel ladite âme de la feuille composite est plaquée sur l'un des côtés ou sur les deux côtés, avec au moins une couche d'un matériau contenant du silicium, en particulier avec un alliage AA4XXX.

9. Procédé selon l'une quelconque des revendications précédentes, dans lequel ledit alliage d'aluminium est sélectionné parmi le groupe AA3XXX, AA5XXX ou AA6XXX.

10. Procédé selon l'une quelconque des revendications précédentes, dans lequel ledit alliage d'aluminium, avant brasage, contient :
de 0 % à 0,25 % de Si ;
de 0 % à 0,40 %, en particulier de 0 % à 0,15 % de Fe ;
de 0,2 % à 1,0 %, en particulier de 0,4 % à 0,8 % de Cu ; et
de 0,7 % à 1,5 % de Mn.

11. Procédé selon l'une quelconque des revendications précédentes, dans lequel ledit alliage d'aluminium, avant brasage, contient :
< 0,6 % de Mg ;
< 0,10 % de Ti ;
< 0,05 % de Cr ;
< 0,05 % de Zr ;
< 0,05 % de V ;
< 0,05 % de Zn ; et
< 0,005 % de Sc.

12. Procédé selon l'une quelconque des revendications précédentes, au cours duquel ladite plage de température définie est comprise entre 350°C et 400°C.

13. Procédé selon l'une quelconque des revendications précédentes, au cours duquel ledit chauffage à la première température et ledit chauffage à la température de brasage sont effectués dans le même four à braser.

14. Procédé selon l'une quelconque des revendications précédentes, dans lequel ledit dispositif comprend un échangeur de chaleur.
